Europäisches Patentamt

European Patent Office

Office européen des brevets

(19)

(11) Veröffentlichungsnummer: **0 247 963**
A2

## EUROPÄISCHE PATENTANMELDUNG

(12)

(21) Anmeldenummer: 87730056.6

(22) Anmeldetag: 15.05.87

(51) Int. Cl.⁴: **H 04 M 3/30**
H 04 Q 5/00

(30) Priorität: 26.05.86 DE 3617829

(43) Veröffentlichungstag der Anmeldung:
02.12.87 Patentblatt 87/49

(84) Benannte Vertragsstaaten: AT BE DE GB

(71) Anmelder: **Siemens Aktiengesellschaft Berlin und München**
**Wittelsbacherplatz 2**
**D-8000 München 2 (DE)**

(72) Erfinder: **Binding, Peter, Dipl.-Ing.**
**Edeltrautweg 22**
**D-1000 Berlin 27 (DE)**

Schüler, Ulrich, Dipl.-Ing.
**Rhinstrasse 23**
**D-1000 Berlin 49 (DE)**

(54) **Verfahren zur Funktionsüberwachung von Fernmeldeanlagen, insbesondere Betriebsfernsprechanlagen, mit Gesellschaftsleitungen.**

(57) Die Erfindung betrifft ein Verfahren zur Funktionsüberwachung einer Fernmeldeanlage, insbesondere Betriebsfernsprechanlage, für selbsttätigen Wählverkehr zwischen sämtlichen über Teilnehmer-Übertragungseinrichtungen an eine allen Teilnehmern gemeinsame Gesellschaftsleitung anschaltbaren Teilnehmerendgeräten.

Von einem die Funktionsüberwachung auslösenden Teilnehmerendgerät (TEG) wird eine Prüfkennzahl (PK) und die Rufnummer des zu prüfenden Teilnehmerendgerätes (TEGn) gewählt und durch Vergleich der beim Prüfvorgang ausgelösten Rücksendung der Rufnummer des zu prüfenden Teilnehmerendgerätes (TEGn) mit der anfangs gewählten Rufnummer das Ergebnis akustisch und/oder optisch angezeigt.

Ein derartiges Verfahren wird zur Prüfung von Gesellschaftsleitungssystemen eingesetzt.

EP 0 247 963 A2

**Beschreibung**

Verfahren zur Funktionsüberwachung von Fernmeldeanlagen, insbesondere Betriebsfernsprechanlagen, mit Gesellschaftsleitungen

Die Erfindung betrifft ein Verfahren zur Funktionsüberwachung einer Fernmeldeanlage, insbesondere Betriebsfernsprechanlage, für selbsttätigen Wählverkehr zwischen sämtlichen über Teilnehmer-Übertragungseinrichtungen an eine allen Teilnehmern gemeinsame Gesellschaftsleitung anschaltbaren Teilnehmerendgeräten.

Derartige Fernmeldeanlagen sind in vielfältiger Weise als Wahlruf- und Befehlsanlagen eingesetzt, bei denen von einem Teilnehmerendgerät aus ein oder mehrere Teilnehmerendgeräte gezielt angerufen werden können. Die Kommunikation untereinander wird über die allen gemeinsamen Gesellschaftsleitung geführt, die dann während eines bestehenden Gesprächzustandes für die nicht an der Verbindung beteiligten anderen Teilnehmerendgeräten gesperrt ist. Dieser Sperrzustand wird beispielsweise durch Einschalten eines Schauzeichens unmittelbar an den nicht am Gespräch beteiligten Endgeräten angezeigt.

Ein weiterer Einsatz derartiger Anlagen ist für die Autobahn- und Straßennotrufanlagen vorgesehen, bei denen beispielsweise eine in Not befindliche Person durch Inbetriebnahme der Notrufsäule automatisch die Gesellschaftsleitung bis zum Ort der Notrufabfrage durch Polizei, Feuerwehr oder andere Rettungsdienste belegt.

Wahlrufanlagen weisen darüber hinaus noch sogenannte Kupplungsübertragungen auf, mit denen es möglich ist, die Gesellschaftsleitungen in einzelne Leitungsabschnitte aufzuteilen. Durch geeignete Schaltmaßnahmen können dann - sofern keine Verbindungen über mehrere dieser Leitungsabschnitte bestehen - innerhalb der einzelnen Abschnitte voneinander unabhängige Einzelverbindungen aufgebaut werden; die Gesellschaftsleitung kann in diesem Fall mehrfach ausgenutzt sein.

Die Prüfung und Überwachung der eingangs definierten Fernmeldeanlagen mit Gesellschaftsleitungen wird in bekannter Weise zunächst vor der eigentlichen Inbetriebnahme solcher Anlagen durch das Montagepersonal durchgeführt. Hierzu werden nach der Installation der Leitungen und der Teilnehmerendgeräte die zu prüfenden Gesprächsverbindungen hergestellt und gegebenenfalls vorhandene Fehler beseitigt.

Nach Inbetriebnahme dieser Anlagen werden in ähnlicher Weise entweder Routineüberprüfungen oder im Störungsfall gezielte Untersuchungen innerhalb der Anlage vorgenommen. Da diese Maßnahmen den Betriebsverkehr unter Umständen nachhaltig stören können, insbesondere bei notwendigen Abschaltungen von Anlagenteilen, werden solche Überprüfungen in der Regel nur in arbeitsfreier Zeit bzw. bei geringer Betriebsfrequenz vornämlich in den Nachtstunden durchgeführt. Die der Erfindung zugrunde liegende Aufgabe besteht darin, die Funktionsüberwachung dieser eingangs definierten Fernmeldeanlagen sowohl im Routinefall als auch bei Störungen unabhängig von arbeitsfreien Zeiten bzw. von der Betriebsfrequenz durchführen zu können. Erfindungsgemäß wird dies durch die Kombination der Merkmale des Patentanspruchs 1 erreicht.

Mit dem Aussenden der Prüfkennzahl wird das ansonsten gerufene Teilnehmerendgerät nicht gerufen, sondern veranlaßt, ein Identifizierungskennzeichen mit der eigenen Rufnummer auszusenden. Als erfindungswesentlich ist in diesem Zusammenhang anzusehen, daß dieser Vorgang zu beliebiger Zeit von einem oder mehreren dazu berechtigten Teilnehmerendgeräten ausgelöst werden kann, ohne daß der normaler Weise über die Gesellschaftsleitung abgewickelte Nachrichtenverkehr über die technisch bedingten Einschränkungen bei Gesellschaftsleitungen hinaus beeinträchtigt wird. Da unmittelbar nach erfolgtem Vergleich und Auswertung der von dem geprüften Teilnehmerendgerät zurückgesendeten Rufnummer mit der von dem prüfenden Teilnehmerendgerät ausgesandten Rufnummer wird die Gesellschaftsleitung durch ein darauf folgendes Auslösesignal wieder freigeschaltet, so daß der normale Verbindungsverkehr wieder ohne Beeinträchtigung erfolgen kann.

Gemäß einer vorteilhaften Ausgestaltung der Erfindung ist vorgesehen, daß dem prüfenden Teilnehmerendgerät die unterschiedlichen Ergebnisse der Funktionsüberwachung durch verschiedene Hörtöne - Quittungston, Besetztton, Wählton - mitgeteilt werden, so daß im Fehlerfall im allgemeinen sofort entsprechende Abhilfemaßnahmen eingeleitet werden können.

Beim totalen Ausfall entsprechender Schalteinrichtungen, bei denen also keine Rücksendung der Rufnummer erfolgen kann, wird gemäß einer weiteren vorteilhaften Ausgestaltung der Erfindung automatisch eine zeitverzögerte Freischaltung der Gesellschaftsleitung wirksam.

Die Erfindung wird in einem figürlich dargestellten Ausführungsbeispiel näher erläutert, das die einzelnen Funktionselemente lediglich 'als Blockschaltbild darstellt.

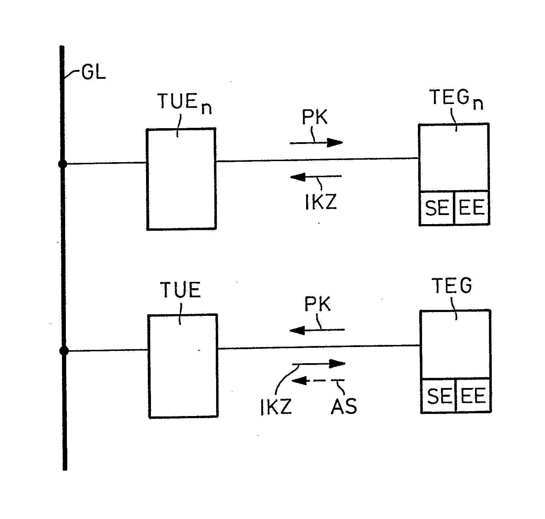

Die Figur läßt erkennen, daß die beiden Teilnehmerendgeräte TEG, TEGn über die jeweils fest zugeordneten Teilnehmer-Übertragungseinrichtungen TUE, TUEn mit der Gesellschaftsleitung GL verbunden sind. Jedes Teilnehmerendgerät TEG, TEGn enthält die Sendeeinrichtung SE und die Empfangseinrichtung EE. Zur Erläuterung des Verfahrens sei angenommen, daß die Funktionsüberwachung von dem Teilnehmerendgerät TEG eingeleitet wird und das zu überwachende Gerät das Teilnehmerendgerät TEGn ist. Von dem die Funktionsüberwachung einleitenden Teilnehmerendgerät TEG wird zunächst die Prüfkennzahl PK gewählt und anschließend die Rufnummer des zu prüfenden Teilnehmerendgerätes TEGn nachgesendet. Die Prüfkennzahl PK und die Rufnummer gelangen über die Gesellschaftsleitung GL und der entsprechenden Teilnehmer-Übertragungseinrichtung TUEn zu dem zu prüfenden Teilnehmerendgerät TEGn und werden dort mittels der Empfangseinrichtung EE dahingehend umgewertet, daß mittels der Sendeeinrichtung SE vorab ein Identifizierungskennzeichen IKZ und anschließend die eigene Rufnummer wieder ausgesendet wird.

Diese Informationen gelangen in gleicher Weise über die Gesellschaftsleitung GL und der Teilnehmer-Übertragungseinrichtung TUE zu dem die Funktionsüberwachung einleitenden Teilnehmerendgerät TEG und werden dort mittels der Empfangseinrichtung EE empfangen und entsprechend ausgewertet. Die eigentliche Funktionüberwachung geschieht durch Vergleich der gewählten Rufnummer von dem die Funktionsüberwachung einleitenden Teilnehmerendgerät TEG mit der empfangenen Rufnummer des zu überprüfenden Teilnehmerendgerätes TEGn. Unmittelbar nach Empfang des Identifizierungskennzeichens IKZ wird die Sendeeinrichtung SE des die Funktionsüberwachung einleitenden Teilnehmerendgerätes TE veranlaßt, ein Auslösesignal AS zur Freischaltung der Gesellschaftsleitung GL auszusenden. Damit ist der Prüfvorgang beendet und die Gesellschaftsleitung GL für die Kommunikation der an diese Gesellschaftsleitung GL angeschalteten Teilnehmerendgeräte wieder frei.

**Patentansprüche**

1. Verfahren zur Funktionsüberwachung einer Fernmeldeanlage, insbesondere Betriebsfernsprechanlage, für selbsttätigen Wählverkehr zwischen sämtlichen über Teilnehmer-Übertragungseinrichtungen an eine allen Teilnehmern gemeinsame Gesellschaftsleitung anschaltbaren Teilnehmerendgeräten, **gekennzeichnet durch** die Kombination der Merkmale

1.1 von einem die Funktionsüberwachung einleitenden Teilnehmerendgerät (TEG) wird eine Prüfkennzahl (PK) und anschließend die Rufnummer des zu prüfenden Teilnehmerendgerätes (TEGn) gewählt,

1.2 die Prüfkennzahl (PK) und die Rufnummer werden von dem zu prüfenden Teilnehmerendgerät (TEGn) dahingehend umgewertet, daß die eigene Rufnummer mit einem vorangestellten Identifizierungskennzeichen (IKZ) wieder ausgesendet wird,

1.3 das die Funktionsüberwachung einleitende Teilnehmerendgeräte (TEG) vergleicht die mit dem vorangestellten Identifizierungskennzeichen (IKZ) empfangene Rufnummer mit der vorab gewählten Rufnummer des zu prüfenden Teilnehmerendgerätes (TEGn),

1.4 das die Funktionsüberwachung einleitende Teilnehmerendgerät (TEG) bekommt das Ergebnis der Funktionsüberwachung akustisch und/oder optisch mitgeteilt und bewirkt durch ein Auslösesignal (AS) die Freischaltung der Gesellschaftsleitung (GL).

2. Verfahren nach Anspruch 1, **gekennzeichnet durch** die Kombination der Merkmale

2.1 bei Übereinstimmung der empfangenen Rufnummer mit der vorab gewählten Rufnummer - Funktionsüberwachung positiv - wird ein Quittungston zum die Funktionsüberwachung einleitenden Teilnehmerendgerät (TEG) übertragen,

2.2 bei Nichtübereinstimmung der empfangenen Rufnummer mit der vorab gewählten Rufnummer - Funktionsüberwachung negativ - wird ein Besetztton zum die Funktionsüberwachung einleitenden Teilnehmerendgerät (TEG) übertragen.

3. Verfahren nach Anspruch 1 und 2, **gekennzeichnet durch** das Merkmal

3.1 der Nichtempfang der Rufnummer mit dem vorangestellten Identifizierungskennzeichen (IKZ) bewirkt eine zeitverzögerte Freischaltung der Gesellschaftsleitung (GL) und die Übertragung eines Wähltons zum die Funktionsüberwachung einleitenden Teilnehmerendgerät (TEG)

0247963